# EUROPEAN PATENT APPLICATION

(11) **EP 3 763 847 A1**
(43) Date of publication of application: **13.01.2021**
(21) Application number: 19763178.1
(22) Date of filing: 07.03.2019
(51) Int. Cl.: C23C 22/57, B29C 45/14, B29C 65/70, B32B 15/08, C23C 22/78

(54) **MAGNESIUM ALLOY/RESIN COMPOSITE STRUCTURE AND METHOD FOR PRODUCING SAME**

(30) Priority: 08.03.2018 JP 2018042259
(71) Applicant: Mitsui Chemicals, Inc., Minato-ku Tokyo 105-7122 (JP)
(72) Inventor: KURIYAGAWA Mizue, Sodegaura-shi, Chiba 299-0265 (JP); TOMITA Yoshihiko, Sodegaura-shi, Chiba 299-0265 (JP); OKUMURA Hiroshi, Sodegaura-shi, Chiba 299-0265 (JP)
(74) Representative: J A Kemp LLP
(86) International application number: PCT/JP2019/009162
(87) International publication number: WO 2019/172389

(57) **Abstract**

A magnesium alloy/resin composite structure (106) including a magnesium alloy member (103) and a resin member (105) integrated to the magnesium alloy member (103) and made of a thermoplastic resin composition, in which the magnesium alloy member (103) surface to which the resin member (105) is not integrated is coated with a layer including a manganese atom, an oxygen atom, and a sulfur atom.

## Description

### TECHNICAL FIELD

The present invention relates to a magnesium alloy/resin composite structure and a method for manufacturing the same.

### BACKGROUND ART

In recent years, from the viewpoint of global environmental protection, an action of aggressively utilizing a magnesium alloy, which is the lightest among metals in practical use and has excellent recyclability, has become active. For example, in the automotive field, as an effort to reduce weight for gas mileage improvement, studies for applying a magnesium alloy to members for which a steel sheet or an aluminum alloy has been so far used has begun. In addition, in the home appliance field, for housing portions of notebook computers, mobile phones, and ECU boxes, substitution from an aluminum alloy in the related art into a magnesium alloy has begun.

In association with the above-described action for metallic material substitution, not only the existing aluminum/resin integrating technique but also a technique for integrating and joining a magnesium alloy and a resin have been demanded in a broad range of fields such as the automotive field, the home appliance field, and a component manufacturing field of industrial equipment and the like. As integrating means therefor, a method in which an adhesive is caused to intrude into an ultrafine protrusion and recess shape portion of a surface-roughened magnesium alloy satisfying a specific surface shape, and a resin member is further adhered to an adhesive layer, thereby manufacturing a magnesium alloy complex is disclosed (for example, Patent Document 1).

A surface roughening method of a magnesium alloy proposed in Patent Document 1 is as described below. That is, a surface portion of a magnesium alloy is defatted using a commercially available defatting agent, then, chemical etching is carried out with an aqueous solution of carboxylic acid or a mineral acid having a concentration of 1% to several percentages, preferably, an aqueous solution of citric acid, malonic acid, acetic acid, nitric acid, or the like, then, a smut removal treatment is carried out with a basic aqueous solution, and then a chemical conversion treatment is carried out. The chemical conversion treatment is a surface treatment carried out as a corrosion prevention measure for imparting resistance to oxidation by moisture or air, and, in Patent Document 1, a method in which a magnesium alloy member is treated with an aqueous solution of weakly acidic potassium permanganate, thereby coating a surface of the magnesium alloy member with a manganese dioxide layer as a chemical conversion coating is described as a preferable aspect of the chemical conversion treatment.

### RELATED DOCUMENT

### PATENT DOCUMENT

[Patent Document 1] Pamphlet of International Publication No. WO2008/133096

### SUMMARY OF THE INVENTION

### TECHNICAL PROBLEM

The inventors of the present application checked the surface roughening method described in Patent Document 1, a surface-roughened magnesium alloy member obtained using the above-described method, and the characteristics of a magnesium alloy/resin composite structure obtained by integrating a thermoplastic resin to the surface-roughened magnesium alloy member. As a result, it was found that, in the case of carrying out the roughening method described in Patent Document 1, specifically, surface roughening according to the roughening method described in Experiment Example 1, from an industrial viewpoint, there is the following problem.

Patent Document 1 discloses a stepwise chemical liquid immersion treatment method, that is, a method in which a metallic member, which is a treatment subject, is sequentially immersed into a plurality of treatment vessels made up of at least one chemical liquid vessel containing a chemical liquid and at least one water washing vessel containing pure water or industrial water, thereby roughening a metallic member surface.

Here, it is found that, in the case of treating the surface by carrying out a step of completing a full immersion treatment by sequentially immersing the magnesium alloy member in the chemical liquid vessel or the water vessel as one cycle, in the roughening method described in Patent Document 1, as the amount of the magnesium alloy member treated increases, that is, as the number of cycles increases in the case of treating the surface of a magnesium alloy flat plate batchwise or as the continuous treatment time increases in the case of continuously surface-treating a roll of the coil-shaped magnesium alloy member, it appears that the magnesium alloy member surface tends to be more likely to be colored to brown or this coloration tendency is recognized to be somewhat improved by increasing the frequency of a renewal operation of the chemical liquid vessel for the chemical etching and/or the chemical liquid vessel for the chemical conversion treatment, that is, the renewal of a partial or full amount of an old chemical liquid repeatedly used for immersion into a virgin liquid (new chemical liquid), but is not fully improved.

That is, in the method disclosed in Patent Document 1, there is a possibility that, in a magnesium alloy/resin composite structure obtained by integrating a resin onto a colored surface-roughened magnesium alloy surface, a surface colored in a portion to which the resin member is not integrated may be exposed. It becomes difficult to apply such a composite structure to uses demanding a beautiful appearance or designability. In order to remove the colored portion of the magnesium alloy surface in an exposed state, to which the resin member is not integrated, a method in which this colored portion is scraped thin by means such as mechanical polishing and a bare skin is recycled can also be considered, but such an additive operation does not only make the entire steps complicated but an increase in the scraping amount also causes a decrease in the effective utilization rate of the magnesium alloy material, which is not preferable.

The present invention has been made in consideration of the above-described circumstances and provides a magnesium alloy/resin composite structure in which coloration of an exposed portion of a magnesium alloy member (in the following description, referred to as a non-resin-integrated portion in some cases) is suppressed, and, furthermore, the present invention provides a manufacturing method for efficiently obtaining a magnesium alloy/resin composite structure in which coloration of an exposed portion of a magnesium alloy member is suppressed.

### SOLUTION TO PROBLEM

As a result of progressing intensive studies regarding the above-described problems, the present inventors found that a magnesium alloy/resin composite structure in which a coating layer including a specific atom is formed on a magnesium alloy surface is capable of solving the above-described problems and attained a magnesium alloy/resin composite structure of the present invention.

Furthermore, the present inventors found that a magnesium alloy/resin composite structure in which coloration of an exposed portion of a magnesium alloy member is suppressed can be efficiently obtained by treating at least a magnesium alloy member surface on which a manganese oxide-containing film is formed through a fine protrusion and recess structure with a specific reducing agent and attained a manufacturing method of a magnesium alloy/resin composite structure of the present invention.

That is, according to the present invention, a magnesium alloy, a resin composite structure, and a method for manufacturing a magnesium alloy/resin composite structure described below are provided.
[1] A magnesium alloy/resin composite structure including a magnesium alloy member and a resin member integrated to the magnesium alloy member and made of a thermoplastic resin composition,
   in which a surface of the magnesium alloy member, to which the resin member is not integrated, is coated with a layer including a manganese atom, an oxygen atom, and a sulfur atom.
[2] The magnesium alloy/resin composite structure according to [1], in which a surface of the magnesium alloy member, to which the resin member is integrated, is coated with a layer not including a sulfur atom and including a manganese atom and an oxygen atom.
[3] The magnesium alloy/resin composite structure according to [1] or [2], in which an average thickness of the layer is equal to or more than 0.1 µm and equal to or less than 5 µm.
[4] A method for manufacturing a magnesium alloy/resin composite structure, the method including: a step of preparing an integrated body in which a resin member is integrated to a magnesium alloy member surface on which a manganese oxide-containing film is formed through a fine protrusion and recess structure, and
   a step of treating at least a non-resin-member- integrated portion of the integrated body with an aqueous composition including a water-soluble reducing agent.
[5] The method for manufacturing a magnesium alloy/resin composite structure according to [4], in which a magnesium alloy material is chemically etched with an acidic aqueous solution, and then the chemically etched magnesium alloy material is subject to a chemical conversion treatment with a permanganate aqueous solution, thereby obtaining the magnesium alloy material on which the manganese oxide-containing film is formed through the fine protrusion and recess structure.
[6] The method for manufacturing a magnesium alloy/resin composite structure according to [4] or [5], in which a pH of the aqueous composition is 3 to 11.
[7] The method for manufacturing a magnesium alloy/resin composite structure according to any one of [4] to [6], in which the water-soluble reducing agent includes one or more selected from the group consisting of hypophosphite, a borane compound, hydrazine, an alkyl- and/or aryl-substituted hydrazine, phosphite, hydroxylamine, ascorbic acid, isoascorbic acid, formaldehyde, hypophosphorous acid, and phosphorus acid.
[8] The method for manufacturing a magnesium alloy/resin composite structure according to any one of [4] to [7], the method further including: a step of, after the step of the treatment with the aqueous composition, carrying out at least one oxidation treatment selected from micro-arc oxidation and anodization on at least the non-resin-member- integrated portion of the integrated body.

### ADVANTAGEOUS EFFECTS OF INVENTION

According to the present invention, a magnesium alloy/resin composite structure in which coloration of a non-resin-integrated portion of a magnesium alloy member is suppressed and an efficient manufacturing method therefor are provided.

### BRIEF DESCRIPTION OF THE DRAWINGS

The above-described objects, other objects, characteristics, and advantages will be further clarified by a preferable embodiment described below and the following drawings pertaining thereto.

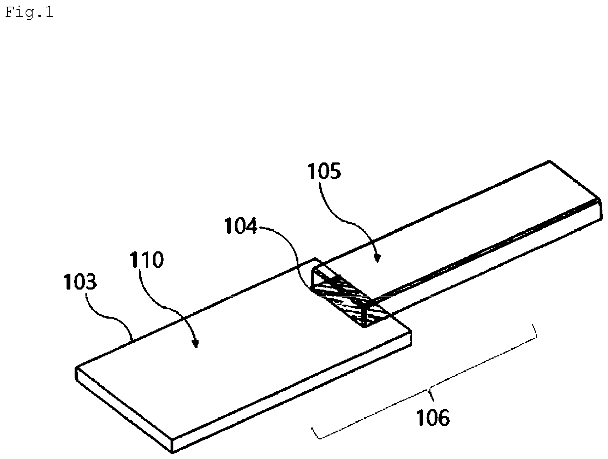

Fig. 1 is an appearance view schematically showing an example of a structure of a magnesium alloy/resin composite structure of an embodiment according to the present invention.
Fig. 2 is a configurational view schematically showing an example of a step of manufacturing the magnesium alloy/resin composite structure of the embodiment according to the present invention by insert molding.
Fig. 3 is a schematic view for describing measurement sites of a total of six straight line portions made up of three random straight line portions having a parallel relationship with each other and three random straight line portions orthogonal to the above-described three straight line portions on a magnesium alloy member surface according to the present embodiment.
Fig. 4 is an appearance view schematically showing a magnesium alloy after a tensile test of the magnesium alloy/resin composite structure.
Fig. 5 is a cross-sectional TEM image at a point P on a magnesium alloy surface of a magnesium alloy/resin composite structure obtained in a comparative example after a tensile test.
Fig. 6 is a cross-sectional TEM image at a point P on a magnesium alloy surface of a magnesium alloy/resin composite structure obtained in an example after a tensile test.
Fig. 7 is an element spectrum at the point P on the magnesium alloy surface and a depth of A of the magnesium alloy/resin composite structure obtained in the comparative example after the tensile test.
Fig. 8 is an element spectrum at the point P on the magnesium alloy surface and a depth of B of the magnesium alloy/resin composite structure obtained in the comparative example after the tensile test.
Fig. 9 is an element spectrum at the point P on the magnesium alloy surface and a depth of C of the magnesium alloy/resin composite structure obtained in the example after the tensile test.
Fig. 10 is an element spectrum at the point P on the magnesium alloy surface and a depth of D of the magnesium alloy/resin composite structure obtained in the example after the tensile test.

### DESCRIPTION OF EMBODIMENTS

Hereinafter, an embodiment of the present invention will be described using drawings. In all of the drawings, similar configurational elements will be given a common reference sign and description thereof will not be repeated. In addition, the drawings are schematic views and do not match actual dimensional ratios. "To" present between numerical values in the description indicate, unless particularly otherwise described, equal to or more than and equal to or less than.

### «Magnesium alloy/resin composite structure»

A magnesium alloy/resin composite structure 106 according to the present embodiment is a magnesium alloy/resin composite structure formed by integrating a magnesium alloy member 103 and a resin member 105 made of a thermoplastic resin composition, and the magnesium alloy member 103 surface to which the resin member 105 is not integrated, that is, a non-resin- ntegrated portion of the magnesium alloy member 103 surface is coated with a layer including a manganese atom, an oxygen atom, and a sulfur atom.

In the present embodiment, the magnesium alloy member 103 surface to which the resin member 105 is integrated (hereinafter, abbreviated as the "integrated portion" in some cases) may be coated with a layer including a manganese atom, an oxygen atom, and a sulfur atom or may be coated with a layer not including a sulfur atom but including a manganese atom and an oxygen atom. In the following description, there will be a case where the former integrated body is referred to as a magnesium alloy/resin composite structure (B) and the latter integrated body is referred to as a magnesium alloy/resin composite structure (A). A preferable magnesium alloy/resin composite structure 106 according to the present embodiment is the magnesium alloy/resin composite structure (A) in which the integrated portion is coated with a layer not including a sulfur atom but including a manganese atom and an oxygen atom. A typical example of the layer not including a sulfur atom but including a manganese atom and an oxygen atom is a layer made of manganese dioxide. In other words, the preferable magnesium alloy/resin composite structure according to the present embodiment is a composite structure in which the non-integrated portion has a coating layer including a manganese atom, an oxygen atom, and a sulfur atom and the integrated portion has a manganese coating layer.

What atom a coating layer on a metallic surface is made of can be sensed by attaching an energy dispersive X-ray spectrometer (EDS) to a transmission electron microscope (TEM), detecting a characteristic X-ray generated by the radiation of an electron beam, and carrying out element mapping or an element spectrum analysis.

An average thickness of the coating layer is, for example, 0.1 µm to 5 µm, preferably 0.2 µm to 5 µm, and more preferably 0.3 to 3 µm. The average thickness can be obtained by selecting 10 random points from each of the cross-sectional TEM images captured at five or more different measurement points, measuring individual thicknesses at a total of 50 or more points, and averaging the thicknesses.

A manufacturing method of the magnesium alloy/resin composite structure 106 according to the present embodiment can be roughly classified into the following two methods.

A first method includes a step of preparing an integrated body (precursor) 106' including the magnesium alloy member 103 and the resin member 105 to which the magnesium alloy member 103 is integrated and a step of treating at least a non-integrated portion 110 with the resin member 105 in the magnesium alloy member 103 of the integrated body 106' with an aqueous composition including a water-soluble reducing agent. The magnesium alloy/resin composite structure 106 obtained by this method is the magnesium alloy/resin composite structure (A).

A second method includes a step of treating the magnesium alloy member 103 with an aqueous composition including a water-soluble reducing agent and a step of producing an integrated body including a resin member integrated to the magnesium alloy member. The magnesium alloy/resin composite structure 106 obtained by this method is the magnesium alloy/resin composite structure (B).

Among them, the first method is preferable because it is possible to suppress variation in integrating strength between the metal and the resin of the integrated body. Here, the magnesium alloy member 103 has, for example, a manganese oxide-containing film on a surface (hereinafter, the magnesium alloy member 103 having a manganese oxide-containing film on a surface will be abbreviated as the manganese-coated magnesium alloy member 103' in some cases).

Hereinafter, the first method, that is, the steps of preparing and producing the magnesium alloy member 103 and the integrated body, the step of the treatment with the aqueous composition including a water-soluble reducing agent, and the magnesium alloy/resin composite structure (A) obtained by this method will be specifically described.

### <Magnesium alloy member>

The basics of the magnesium alloy member 103 according to the present embodiment and a manufacturing method thereof are, as described above, well known. For example, the magnesium alloy member is prepared by a method in which a chemical etching step of chemically etching a magnesium alloy member that is a raw material with an acidic aqueous solution and a chemical conversion treatment step of carrying out a chemical conversion treatment with a permanganate aqueous solution are sequentially carried out. Before and after the chemical etching step and the chemical conversion treatment step, several additive steps may be randomly carried out. As such additive steps, for example, a pretreatment step carried out before the chemical etching step, a washing step carried out using an inorganic acid aqueous solution after the chemical etching step mainly for removing smuts, a neutralization step or a washing step carried out after the treatment of the acidic aqueous solution or a basic aqueous solution, and the like can be exemplified. The magnesium alloy member 103 according to the present embodiment may be manufactured by a batch treatment method as described in examples described below, may be manufactured by a so-called roll-to-roll method in which a roll made of a coil-shaped magnesium alloy member is continuously passed through a chemical liquid vessel, or may manufactured by a hybrid method that is a combination of the above-described methods.

Hereinafter, (1) the pretreatment step, (2) the chemical etching step, and (3) the chemical conversion treatment step according to the present embodiment will be described in this order.

The magnesium alloy member that is a raw material according to the present embodiment is not particularly limited, but is preferably a magnesium alloy member in which the content of Mn as an alloy component is equal to or less than 0.5% by mass. For example, alloy members of Mg and a rare earth such as Al, Zn, Si, Cu, Fe, Mn, Ag, Zr, Sr, Pb, Re, Y, or Misch metal or the like are exemplified. As typical magnesium alloy member, commercially available magnesium alloy members such as AZ91, AZ31, AM60, AM50, AM20, AS41, AS21, and AE42 are exemplified.

The shape of the magnesium alloy member is not particularly limited as long as the magnesium alloy member can be integrated with the resin member 105, and, for example, the magnesium alloy member can be formed in a flat plate shape, a curved plate shape, a coil shape, a rod shape, a tubular shape, a lump shape, or the like. In addition, the magnesium alloy member may be a structure having the above-described shapes in combination. The magnesium alloy member as described above is preferably a member obtained by processing a magnesium alloy material to the above-described predetermined shape by cutting; plastic processing by pressing or the like; die-cutting; thinning such as cutting, polishing, or discharge processing; or the like.

### (1) Pretreatment step

Originally, the magnesium alloy member has, unlike an aluminum alloy member or the like, a hexagonal close-packed structure (HCP) and thus does not easily deform, which demands the use of a large amount of a machine oil, a mold release agent, or the like during molding or processing in many cases. As a result, there is a high possibility that a large amount of the machine oil may be attached to and intrude into the surface of the magnesium alloy member and the surface may be contaminated, and thus it is desirable to carry out a defatting treatment using an alkali aqueous solution such as sodium hydroxide or a potassium hydroxide aqueous solution, a commercially available defatting agent for a magnesium alloy, or the like prior to the chemical etching treatment. The defatting treatment is carried out, for example, at 40°C to 70°C for several minutes. In addition, prior to the defatting treatment, a treatment for removing an oxide film or the like deposited onto the magnesium alloy member surface by mechanical polishing such as sandblasting or grinding processing, chemical polishing, or the like may be carried out.

### (2) Chemical etching step

The chemical etching step according to the present embodiment is a step of imparting a fine protrusion and recess shape onto the magnesium alloy member surface. A chemical etchant (in a form of an aqueous solution or a suspension) used in the chemical etching step is, for example, an acidic aqueous solution including an organic acid or an inorganic acid. From the viewpoint of the integrating strength between the magnesium alloy member and the resin member, the chemical etchant may be an acidic aqueous solution including an organic acid or an acidic aqueous solution including an inorganic acid; however, from the viewpoint of suppressing the amount of etching to the minimum amount and stably developing a high integrating strength, the etchant is preferably an acidic aqueous solution including an organic acid. As the organic acid, an aliphatic carboxylic acid is more preferably included. As the aliphatic carboxylic acid, any carboxylic acid can be used without any limitation as long as the carboxylic acid is soluble in water at room temperature, but more preferable aliphatic carboxylic acids are classified into three kinds of a polybasic acid not having a hydroxy group (a1), a monobasic acid having a hydroxy group (a2), and a polybasic acid having a hydroxy group (a3). As the polybasic acid not having a hydroxy group (a1), oxalic acid, malonic acid, adipic acid, and maleic acid can be exemplified. As the monobasic acid having a hydroxy group (a2), glycolic acid, lactic acid, glyceric acid, 2-hydroxybutyric acid, 3-hydroxybutyric acid, and mevalonic acid can be exemplified. As the polybasic acid having a hydroxy group (a3), citric acid, malic acid, and tartaric acid can be exemplified. In the case of using a polybasic acid, a corresponding acid anhydride in which two carboxy groups are, formally, intramolecularly dehydrated and condensed may be used. This is because, generally, when dissolving in water, an acid anhydride is hydrolyzed and converted to a dibasic acid. Among these aliphatic carboxylic acids, from the viewpoint of the roughening efficiency, that is, stably developing an efficient integrating strength even with the minimum amount of etching or the viewpoint of the chemical safety of the etchant, the polybasic acid having a hydroxy group (a3) is preferable, and citric acid or tartaric acid is particularly preferably used. In addition, malonic acid is also a chemical etchant preferably used. At the time of a treatment, it is possible to immerse the magnesium alloy member on which the defatting treatment has been randomly carried out in an aliphatic carboxylic acid aqueous solution having a concentration being preferably 0.1% to 5% by mass and more preferably 0.5% to 5% by mass for 1 to 20 minutes, preferably 2 to 15 minutes.

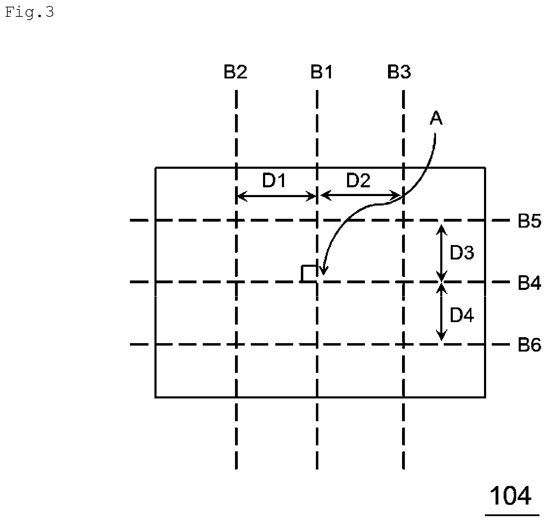

Fig. 3 is a schematic view for describing a total of six straight line portions made up of three random straight line portions having a parallel relationship with each other and three random straight line portions orthogonal to the above-described three straight line portions on the magnesium alloy member surface.

With the above-described chemical etching, a fine protrusion and recess structure in which the surface roughness, which is measured according to JIS B0601 (corresponding international standard: ISO4287), satisfies the following requirements (1) and (2) at the same time is formed on, for example, a total of the six straight line portions made up of the three random straight line portions having a parallel relationship with each other and the three random straight line portions orthogonal to the above-described three straight line portions on the magnesium alloy member surface. As the six straight line portions, for example, six straight line portions B1 to B6 as shown in Fig. 3 can be selected. Here, the horizontal distance and the vertical distance D1 to D4 between the respective straight lines are, for example, 2 to 5 mm.
(1) An average value of 10-point average roughness (Rz) in an evaluation length of 4 mm is preferably more than 1.0 µm and equal to or less than 20 µm, more preferably equal to or more than 2.0 µm and equal to or less than 10 µm, and still more preferably equal to or more than 2.0 µm and equal to or less than 5 µm.
(2) An average value of average lengths (RSm) of roughness curve elements in an evaluation length of 4 mm is preferably more than 10 µm and equal to or less than 200 µm, more preferably equal to or more than 20 µm and equal to or less than 150 µm, and still more preferably equal to or more than 30 µm and equal to or less than 120 µm.

After the end of the chemical etching, washing using a weakly basic aqueous solution and/or a strongly basic aqueous solution may be carried out as necessary. As such a basic aqueous solution, typically, a sodium carbonate aqueous solution, a sodium hydrogen carbonate aqueous solution, or a mixture thereof can be exemplified, and a weakly basic aqueous solution having a pH of approximately 9.8 in which 1% by mass of sodium carboxylate and 1% by mass of sodium hydrogen carbonate dissolve is preferably used. In addition, as the strongly basic aqueous solution, for example, approximately 15% by mass of a sodium hydroxide aqueous solution is used. A water washing operation may be added before and after the washing using the weakly basic aqueous solution and/or the basic aqueous solution.

### (3) Chemical conversion treatment step

The magnesium alloy member for which the chemical etching has been completed is subsequently subject to a chemical conversion treatment, whereby the surface is coated with a chemical conversion film. That is, magnesium is a metal having a high ionization tendency, and the oxidation rate by moisture and oxygen in the air is relatively fast compared with those of other metals. Generally, the magnesium alloy member is coated with a natural oxide film; however, from the viewpoint of corrosion resistance, it is difficult to say that the magnesium alloy member is sufficiently coated, and, even under an ordinary environment, oxidation corrosion progresses due to a water molecule or oxygen diffused in the natural oxide film. In order to suppress the above-described oxidation reaction, a chemical conversion treatment for positively forming a chemical conversion film has been thus far carried out.

As a well-known chemical conversion treatment method, it is common to carry out a corrosion prevention measure by carrying out a treatment in which the magnesium alloy member is immersed in a weakly acidic permanganate aqueous solution and fully covered with a thin layer of manganese dioxide, a chromate treatment in which the magnesium alloy member is immersed in an aqueous solution of chromic acid, potassium dichromate, or the like and fully covered with a thin layer of chromium oxide, or the like. In the present embodiment, from the viewpoint of environmental contamination, the former method of coating the magnesium alloy member with a manganese dioxide thin layer is preferably used.

In the present embodiment, a pH value of the weakly acidic permanganate aqueous solution measured at 25°C is also affected by the degree of coloration occurring on the surface of the magnesium alloy member and thus needs to be held in an appropriate range. This pH value is preferably equal to or higher than 3.0 and lower than 4.6, more preferably equal to or higher than 3.1 and equal to or lower than 4.4, still more preferably equal to or higher than 3.2 and equal to or lower than 4.2, and far still more preferably equal to or higher than 3.3 and equal to or lower than 4.0. When the pH of the permanganate aqueous solution satisfies the above-described range, even in a case where the number of batch treatments for the surface roughening of the magnesium alloy member is increased, that is, a case where the treatment amount of the magnesium alloy member, on which a roughening treatment is carried out, is increased, it is possible to suppress the surface of the magnesium alloy member being colored to brown or dark brown. As a cationic species forming permanganate, an ammonium ion, a sodium ion, a potassium ion, a silver ion, and a zinc ion can be exemplified; however, from the viewpoint of safety or handleability in the air as a chemical substance, a potassium ion is preferable. The concentration of permanganate in the permanganate aqueous solution is, for example, 0.5% to 5% by mass and preferably 1% to 3% by mass.

When the concentration of permanganate is equal to or more than the above-described lower limit value, the oxidation capability becomes more favorable, and, when the concentration of permanganate is equal to or less than the above-described upper limit value, it is possible to make a chemical conversion film generation rate an appropriate rate while suppressing the amount of permanganate used.

The permanganate aqueous solution having a pH value in a specific acidic region as described above can be easily prepared by, for example, dissolving permanganate in an acidic aqueous solution having a pH value in a range of equal to or higher than 3.0 and less than 3.7 and having a pH buffering capacity.

As the acidic solution having a pH buffering capacity, an acidic solution containing at least one of acetate, phthalate, citrate, succinate, lactate, tartrate, borate, and phosphate each in a range of 0.1% to 5.0% by mass can be exemplified. Specifically, it is possible to use an aqueous solution containing at least one of acetate such as sodium acetate (CH₃COONa), phthalate such as potassium hydrogen phthalate ((KOOC)₂C₆H₄), citric acid such as sodium citrate (Na₃C₆H₅O₇) and potassium dihydrogen citrate (KH₂C₆H₅O₇), succinate such as sodium succinate (Na₂C₄H₄O₄), lactate such as sodium lactate (NaCH₃CHOHCO₂), tartrate such as sodium tartrate (Na₂C₄H₄O₆), borate, and phosphate in a concentration range of 0.1% to 5.0% by mass.

At the time of the treatment with the weakly acidic aqueous solution of permanganate, the treatment temperature is, for example, 25°C to 60°C and preferably 30° to 55°C, and the treatment time is five seconds to 10 minutes and preferably approximately 10 seconds to five minutes. When the treatment temperature is equal to or higher than the above-described lower limit value, it is not necessary to use an additional cooling facility or the like such as a refrigerating machine in summer, which is preferable. When the treatment temperature is equal to or lower than the above-described upper limit value, it is possible to suppress the reaction heat per short time of permanganate, which is preferable.

The surface roughness, which is measured according to JIS B0601 (corresponding international standard: ISO4287), of the manganese-coated magnesium alloy member 103' having, for example, a brown to brownish-red surface produced as described above preferably satisfies the following requirements (1) and (2) at the same time. As the six straight line portions, for example, the six straight line portions B1 to B6 as shown in Fig. 3 can be selected in the same manner as in the surface roughness measurement method immediately after the end of the chemical etching step. Here, the horizontal distance and the vertical distance D1 to D4 between the respective straight lines are, for example, 2 to 5 mm.
(1) An average value of 10-point average roughness (Rz) in an evaluation length of 4 mm is preferably equal to or more than 0.5 µm and equal to or less than 15 µm, more preferably equal to or more than 0.8 µm and equal to or less than 10 µm, and still more preferably equal to or more than 1.0 µm and equal to or less than 5.0 µm.
(2) An average value of average lengths (RSm) of roughness curve elements in an evaluation length of 4 mm is preferably more than 10 µm and equal to or less than 150 µm, more preferably equal to or more than 20 µm and equal to or less than 130 µm, and still more preferably equal to or more than 30 µm and equal to or less than 120 µm.

### <Step of preparing and producing integrated body>

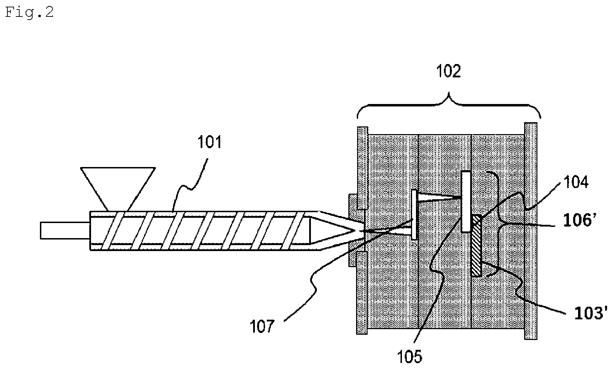

Fig. 2 is a configurational view schematically showing an example of a process for manufacturing the integrated body (precursor) 106' according to the present embodiment.

The integrated body (precursor) 106' according to the present embodiment can be obtained by, for example, insert-molding (injection-molding) the resin member 105 into the magnesium alloy member 103 (manganese oxide-coated magnesium alloy member 103'). The resin member 105 is made of, for example, a thermoplastic resin composition (P). The thermoplastic resin composition (P) includes a thermoplastic resin (A) as a resin component and a filler (B) as necessary. Furthermore, the thermoplastic resin composition (P) may also include other blending agents as necessary.

### (Thermoplastic resin (A))

The thermoplastic resin (A) is not particularly limited, and examples thereof include a polyolefin-based resin, a polymethacrylic resin such as polymethyl methacrylate resin, a polyacrylic resin such as polymethyl acrylate resin, a polystyrene resin, a polyvinyl alcohol-polyvinyl chloride copolymer resin, a polyvinyl acetal resin, a polyvinyl butyral resin, a polyvinyl formal resin, a polymethylpentene resin, a maleic anhydride-styrene copolymer resin, a polycarbonate resin, a polyphenylene ether resin, a polyether ether ketone resin, an aromatic polyetherketone such as a polyether ketone resin, a polyester-based resin, a polyamide-based resin, a polyamideimide resin, a polyimide resin, a polyetherimide resin, a styrene-based elastomer, a polyolefin-based elastomer, a polyurethane-based elastomer, a polyester-based elastomer, a polyamide-based elastomer, an ionomer, an aminopolyacrylamide resin, an isobutylene maleic anhydride copolymer, ABS, ACS, AES, AS, ASA, MBS, an ethylene-vinyl chloride copolymer, an ethylene-vinyl acetate copolymer, an ethylene-vinyl acetate-vinyl chloride graft polymer, an ethylene-vinyl alcohol copolymer, a chlorinated polyvinyl chloride resin, a chlorinated polyethylene resin, a chlorinated polypropylene resin, a carboxyvinyl polymer, a ketone resin, an amorphous copolyester resin, a norbornene resin, fluoroplastics, a polytetrafluoroethylene resin, a fluorinated ethylene polypropylene resin, PFA, a polychlorofluoroethylene resin, an ethylene tetrafluoroethylene copolymer, a polyvinylidene fluoride resin, a polyvinyl fluoride resin, a polyarylate resin, a thermoplastic polyimide resin, a polyvinylidene chloride resin, a polyvinyl chloride resin, a polyvinyl acetate resin, a polysulfone resin, a polyparamethylstyrene resin, a polyallylamine resin, a polyvinyl ether resin, a polyphenylene oxide resin, a polyphenylene sulfide (PPS) resin, a polymethylpentene resin, oligoester acrylate, a xylene resin, a maleic acid resin, a polyhydroxybutyrate resin, a polysulfone resin, a polylactic acid resin, a polyglutamic acid resin, a polycaprolactone resin, a polyether sulfone resin, a polyacrylonitrile resin, a styreneacrylonitrile copolymer resin, and the like. These thermoplastic resins (A) may be used singly or two or more thermoplastic resins may be used in combination.

Among these, one or more thermoplastic resins selected from a polyolefin-based resin, a polyester-based resin, and a polyamide-based resin is preferably used as the thermoplastic resin (A) from the viewpoint of more effectively obtaining an effect for improving the integrating strength between the magnesium alloy member 103 and the resin member 105.

### (Filler (B))

The thermoplastic resin composition (P) may further include a filler (B) from the viewpoint of adjusting the linear expansion coefficient difference between the magnesium alloy member 103 and the resin member 105 or improving the mechanical strength of the resin member 105.

As the filler (B), it is possible to select, for example, one or more selected from the group consisting of a glass fiber, a carbon fiber, a carbon particle, clay, talc, silica, a mineral, and a cellulose fiber. Among these, one or two or more selected from a glass fiber, a carbon fiber, talc, and a mineral is preferable.

In a case where the thermoplastic resin composition (P) includes the filler (B), the content thereof is preferably equal to or more than 1 part by mass and equal to or less than 80 parts by mass, more preferably equal to or more than 5 parts by mass and equal to or less than 70 parts by mass, and particularly preferably equal to or more than 10 parts by mass and equal to or less than 50 parts by mass with respect to 100 parts by mass of the thermoplastic resin (A).

### (Other blending agents)

The thermoplastic resin composition (P) may also include other blending agents for the purpose of further imparting an intrinsic function other than the mechanical strength. As such blending agents, a heat stabilizer, an antioxidant, a pigment, a weathering agent, a flame retardant, a plasticizer, a dispersant, a lubricant, a mold release agent, an antistatic agent, and the like are exemplified. In a case where the thermoplastic resin composition (P) includes other blending agents, the content thereof is preferably 0.0001 to 5 parts by mass and more preferably 0.001 to 3 parts by mass with respect to 100 parts by mass of the thermoplastic resin (A).

A manufacturing method of the integrated body (precursor) 106' according to the present embodiment, that is, a method for integrating the resin member 105 made of the thermoplastic resin composition (P) to the magnesium alloy member 103 (for example, the manganese-coated magnesium alloy member 103') is preferably insert molding (injection molding). Specifically, it is preferable to mold the resin member 105 by an injection molding method in which the magnesium alloy member 103 is inserted into a cavity portion of an injection molding die and the thermoplastic resin composition (P) is injected into a mold and manufacture the magnesium alloy/resin composite structure 106. Hereinafter, the manufacturing method will be specifically described.

The manufacturing method of the integrated body (precursor) 106' according to the present embodiment includes, for example, the following steps [1] to [3].
[1] A step of producing a desired thermoplastic resin composition (P)
[2] A step of installing the magnesium alloy member 103 (for example, the manganese-coated magnesium alloy member 103') in a mold 102 for injection molding
[3] A step of injection-molding the thermoplastic resin composition (P) in the mold 102 through an injection molder 101 such that the thermoplastic resin composition comes into contact with at least a fine protrusion and recess-formed region of the manganese-coated magnesium alloy member 103' and forming the resin member 105.

Hereinafter, an injection molding method by the steps [2] and [3] will be described.

First, the mold 102 for injection molding is prepared, and the manganese-coated magnesium alloy member 103' including the fine protrusion and recess-formed region is installed by opening the mold.

After that, the mold 102 is closed, and the thermoplastic resin composition (P) obtained in the step [1] is injected into and solidified in the mold 102 such that at least a part of the thermoplastic resin composition (P) comes into contact with the fine protrusion and recess-formed region on the surface of the manganese-coated magnesium alloy member 103'. After that, the mold 102 is opened, and thermoplastic resin composition is released from the mold, whereby the integrated body (precursor) 106' can be obtained.

In addition, in association with the injection molding by the steps [1] to [3], injection foam molding or rapid heat cycle molding (RHCM, heating and cooling molding) in which the mold 102 is rapidly heated and cooled may be jointly used.

As a method for the injection foam molding, there are a method in which a chemical foaming agent is added to a resin, a method in which nitrogen gas or carbonate gas is directly injected into a cylinder portion of an injection molder, and a MuCell injection form molding method in which nitrogen gas or carbonate gas is injected into a cylinder portion of an injection molder in a supercritical state, and, in all of the methods, it is possible to obtain the magnesium alloy/resin composite structure 106 in which the resin member 105 is a foam. In addition, in all of the methods, it is also possible to use counter pressure or, depending on the shape of a molding product, use core back as a control method of the mold 102.

The rapid heat cycle molding can be carried out by connecting a rapid heating and cooling device to the mold 102. The rapid heating and cooling device may be operated in an ordinarily-used manner. As a heating method, it is possible to any one method of a steam method, a pressurized hot water method, a hot water method, a hot oil method, an electric heater method, and an electromagnetic induction overheat method or a method in which a plurality of these methods is combined together. As a cooling method, it is possible to any one method of a cold water method and a cold oil method or a method in which a plurality of these methods is combined together. As conditions of the rapid heat cycle molding method, for example, it is desirable that the mold 102 for injection molding is heated to a temperature of equal to or higher than 100°C to equal to or lower than 250°C, the injection of the thermoplastic resin composition (P) is completed, and then the mold 102 for injection molding is cooled. Regarding a temperature at which the mold is heated, a preferable range varies depending on the thermoplastic resin (A) forming the thermoplastic resin composition (P), and the temperature is preferably equal to or higher than 100°C to equal to or lower than 150°C when the thermoplastic resin is a crystalline resin and has a melting point of lower than 200°C and desirably equal to or higher than 140°C to equal to or lower than 250°C when the thermoplastic resin is a crystalline resin and has a melting point of equal to or higher than 200°C. The temperature is desirably equal to or higher than 100°C to equal to or lower than 180°C for an amorphous resin.

The integrated body (precursor) 106' according to the present embodiment exhibits a high integrating strength on its own and can be used in a variety of industrial fields due to an advantage of lightness; however, in a portion to which the resin is not integrated, for example, a brown to brownish-red colored portion is exposed, and thus it is difficult to apply the integrated body to a field demanding a beautiful appearance or designability. In order to remove the above-described coloration in the non-integrated portion, a reduction treatment according to the present embodiment is carried out.

### <Step of treating aqueous composition including water-soluble reducing agent>

The magnesium alloy/resin composite structure 106 can be manufactured by carrying out a reduction treatment on the integrated body (precursor) 106' according to the present embodiment with an aqueous composition including a water-soluble reducing agent. The reducing step is carried out by treating at least the non-integrated portion 110 of the resin member 105 in the magnesium alloy member 103 of the integrated body (precursor) 106' with an aqueous composition including a water-soluble reducing agent. However, for the selective reduction treatment of only the non-resin-integrated portion of the magnesium alloy member 103 (for example, the manganese-coated magnesium alloy member 103'), it is necessary to use a method in which only a metallic surface is protected using masking tape or the like, and thus, generally, a method in which the entire integrated body (precursor) 106', that is, all of the magnesium alloy member 103 (for example, manganese-coated magnesium alloy member 103') and the resin member 105 is treated with an aqueous composition including a water-soluble reducing agent is employed.

The pH of the aqueous composition including a water-soluble reducing agent according to the present embodiment is, for example, 3 to 11 and preferably 4 to 10. When the pH is in the above-described range, it is possible to suppress the induction of a chemical decomposition of the resin member 105 of the integrated body (precursor) 106', which is preferable. Particularly, in a case where a polyester-based resin is used as the resin member, the influence is significant. In addition, when the pH is equal to or higher than the above-described lower limit value, it is possible to suppress a case where the reducing capability fails to reach a practical level, and, when the pH is equal to or lower than the above-described upper limit value, it is possible to suppress a rapid progress of a reduction reaction, and reaction control becomes easy. The concentration of the water-soluble reducing agent included in the aqueous composition is, for example, approximately 0.05% to 5% by mass. The reduction treatment is carried out by, generally, immersing the integrated body in a chemical liquid vessel filled with the aqueous composition in a range of room temperature to 50°C, preferably in a range of 10°C to 40°C such that at least the non-integrated portion 110 of the integrated body (precursor) 106' comes into contact with a chemical liquid. The contact time is also dependent on the contact temperature and is, for example, 0.5 seconds to 500 seconds and preferably approximately 1 second to 300 seconds.

The reducing agent forming the aqueous composition is, for example, one or more selected from hypophosphite, a borane compound, hydrazine, an alkyl- and/or aryl-substituted hydrazine, phosphite, hydroxylamine, ascorbic acid, isoascorbic acid, formaldehyde, hypophosphorous acid, and phosphorous acid. From a variety of viewpoints such as stability as an aqueous composition, the reducing capability, the solubility in water, easiness in controlling the pH of the aqueous composition, and the chemical substance safety, as the reducing agent, hydroxylamine is preferably used. Hydroxylamine may be used in a hydrosulfate or hydrochloride form, but is preferably used in a hydrosulfate form.

The second method, that is, a method including a step of treating the magnesium alloy member with an aqueous composition including a water-soluble reducing agent and a step of producing an integrated body including a resin member integrated to the magnesium alloy member and the magnesium alloy/resin composite structure (B) obtained by this method can be, basically, carried out according to the method described in the section of the first method. That is, the pretreatment step, the chemical etching step, the chemical conversion treatment step, and the treatment step with the aqueous composition including the water-soluble reducing agent are sequentially carried out on the magnesium alloy member to prepare the magnesium alloy member 103, and then the thermoplastic resin composition (P) described in the section of the first method is insert-molded (injection-molded), whereby the magnesium alloy/resin composite structure (B) can be obtained. Regarding the aspect and conditions for carrying out the respective element steps of the second method, it is possible to employ the aspect and conditions for carrying out the respective element steps of the first method.

After the reduction treatment with the water-soluble reducing agent-containing aqueous composition according to the present embodiment is carried out, a water washing treatment is carried out as necessary. A step of carrying out at least one oxidation treatment selected from micro-arc oxidation (MAO) and anodization, preferably, an MAO treatment on at least the non-integrated portion 110 with the resin member 105 in the magnesium alloy/resin composite structure 106 according to the present embodiment may be further included. When this step is carried out, it is possible to improve the stability in the air of the metallic surface after the reduction treatment, which is preferable. The MAO treatment is generally carried out by a method in which a high voltage is applied in an alkaline electrolytic solution in which an alkali metallic salt of phosphoric acid or pyrophosphoric acid dissolves. The MAO treatment may be a selective treatment carried out only on the metallic surface to which the resin member 105 is not integrated or may be carried out on the entire magnesium alloy/resin composite structure 106.

The magnesium alloy/resin composite structure 106 according to the present embodiment reproducibly develops a high integrating strength even under a severe condition and is used in a variety of industrial fields due to its advantage of suppressing the coloration of the non-integrated portion 110 with the resin member 105 in the magnesium alloy member 103. For example, a personal computer field represented by a bottom case of a notebook computer and a liquid crystal rear case; a mobile phone field such as a thin-walled housing and a frame body for a mobile phone; a camera field such as a cover and a mirror box for a digital single-lens reflex camera; an audio field such as a speaker vibration plate; a second hand of a clock; an automobile field such as an automobile head cover, an oil pan, a cylinder block, a steering wheel, a steering member, a transmission case, a seat back frame, and a road wheel; a motorcycle engine field; an aeronautical field such as an engine component for an airplane and a gear box for a helicopter; a railway vehicle field; a tool field such as a lightweight plier and a lightweight hammer; and a sports field such as competition yo-yo can be exemplified.

Hitherto, the uses of the magnesium alloy/resin composite structure 106 according to the present embodiment have been described, but these are examples of the use of the present embodiment, and the present embodiment can also be used in a variety of uses other than the above-described uses.

Hitherto, the embodiment of the present invention has been described, but the embodiment is an example of the present invention, and the present invention includes a variety of configurations other than the above-described configuration.

### [Examples]

Hereinafter, the present embodiment will be described in detail with reference to examples and comparative examples. The present embodiment is not limited to the description of these examples.

### [Example 1]

### (Surface roughening)

A magnesium alloy plate AZ91D (thickness: 2.0 mm) was cut to be 45 mm in length and 18 mm in width, and a total of 500 flat plate-shaped magnesium alloy plates was produced. Next, the following treatment was carried out on the magnesium alloy plates one by one, thereby producing intermediate treatment bodies.

First, the magnesium alloy plates were immersed in a 7.5% by mass aqueous solution of a commercially available defatting agent for a magnesium alloy "CLEANER 160 (manufactured by Meltex Inc.)" (60°C) for five minutes and then washed with water. Next, the magnesium alloy plates were chemically etched by being immersed in a 3% by mass malonic acid aqueous solution vessel set to 30°C for 60 seconds and then washed with water at room temperature for two minutes. After that, for the purpose of removing a smut, the magnesium alloy plates were immersed in a sodium carbonate/sodium hydrogen carbonate-mixed aqueous solution (the concentration of sodium carbonate: 1% by mass, the concentration of sodium hydrogen carbonate: 1% by mass, pH: 9.8) (65°C) for five minutes. Next, the magnesium alloy plates were immersed in a 15% by mass sodium hydroxide aqueous solution (65°C) for five minutes and then washed with water, thereby obtaining intermediate treatment bodies α. Here, the defatting agent aqueous solution in the defatting vessel, the sodium carbonate/sodium hydrogen carbonate-mixed aqueous solution in a smut removal vessel, the sodium hydroxide aqueous solution in the smut removal vessel, a malonic acid aqueous solution in the malonic acid aqueous solution vessel, and water in a water washing vessel were replaced by newly-produced chemical liquids every time 10 magnesium alloy plates were treated.

The first, 10^{th}, 30^{th}, 100^{th}, 200^{th}, 300^{th}, 400^{th}, and 500^{th} (final) intermediate treatment bodies α were sampled, and the surface roughness thereof was measured using a surface roughness measurement instrument "SURFCOM 1400D" manufactured by Tokyo Seimitsu Co., Ltd. As a result, it was confirmed that, in all of the treated plates, the 10-point average roughness (Rz) was in a range of 2 µm to 3 µm, and the average length (RSm) of roughness curve elements was in a range of 90 µm to 110 µm. From these results, it is assumed that, in the chemical etching step, a fine protrusion and recess structure was formed under almost the same acid condition.

### (Chemical conversion treatment by permanganate)

Next, one intermediate treatment body α for which the chemical etching and the smut removal operation were finished was immersed in a potassium permanganate aqueous solution having a pH, measured at 25°C, of 3.6 at 45°C for 90 seconds, then, washed with ultrasonic water at room temperature for five minutes, and then dried in a hot-air dryer, thereby obtaining a surface-roughened body A1. Here, the potassium permanganate aqueous solution having a pH, measured at 25°C, of 3.6 was produced by dissolving 2% by mass of potassium permanganate in an acetic acid/sodium acetate aqueous solution buffered to a pH of 3.6 (measured at 25°C) by adding acetic acid to a 0.5% by mass sodium acetate·trihydrate aqueous solution.

A series of these cycle operations were repeated 400 times while the intermediate treatment body α was changed to a new intermediate treatment body, and a 100^{th} surface-roughened body A100, a 200^{th} surface-roughened body A200, and a 350^{th} surface-roughened body A350 were ensured halfway. The pH of the potassium permanganate aqueous solution after the production of the surface-roughened body A350 was 4.0. As a result of measuring the surface roughness of these surface-roughened bodies using the same method as described above, it was found that the 10-point average roughness (Rz) was in a range of 1.5 µm to 3.0 µm, and the average length (RSm) of roughness curve elements was in a range of 80 µm to 100 µm.

For the surface-roughened body A1, the surface-roughened body A100, the surface-roughened body A200, and the surface-roughened body A350, five points were randomly selected from the roughened surface, and the tones were visually observed. As a result, in all of the roughened bodies, the tones at the five points were brown to brownish red.

### (Production of integrated body)

The surface-roughened body A1, the surface-roughened body A100, the surface-roughened body A200, and the surface-roughened body A350 were respectively installed in a small-sized dumbbell metallic insert mold 102 in which J55AD-30H manufactured by The Japan Steel Works, Ltd. was mounted. Next, a PBT resin (DURANEX 930HL) manufactured by Polyplastics Co., Ltd., which was a resin composition (P), was injection-molded in the mold 102 under conditions of a cylinder temperature of 270°C, a mold temperature of 160°C, an injection primary pressure of 90 MPa, and a pressure kept of 80 MPa, and an integrated body B1, an integrated body B100, an integrated body B200, and an integrated body B350 were respectively obtained.

A tensile tester "MODEL 1323 (manufactured by Aikoh Engineering Co., Ltd.)" was used, an exclusive jig was attached to the tensile tester, and the integrating strengths of the respective integrated bodies were measured at room temperature (23°C) under conditions of an inter-chuck distance of 60 mm and a tension rate of 10 mm/min. A load at break (N) was divided by the area of the magnesium alloy/resin-integrated portion, thereby obtaining an integrating strength. The integrating strengths S_{B1}, S_{B100}, S_{B200}, and S_{B350} of the integrated body B1, the integrated body B100, the integrated body B200, and the integrated body B350 were respectively 28 MPa, 28 MPa, 27 MPa, and 28 MPa. The average value was 28 MPa, and the standard deviation was 0.4 MPa. The broken surfaces were all resin base material breakage.

### (Reduction treatment)

An integrated body B2 obtained from a second surface-roughened body A2, an integrated body B101 obtained from a 101^{st} surface-roughened body A101, an integrated body B201 obtained from a 201^{st} surface-roughened body A201, and an integrated body B351 obtained from a 351^{st} surface-roughened body A351 were fully immersed in a vessel filled with a 0.5% by mass hydroxylamine sulfate aqueous solution (0.4% by mass in terms of hydroxylamine, pH=4.5) at equal to or lower than 25°C for five minutes. Next, the integrated bodies were washed with water and dried, thereby obtaining individual magnesium alloy/resin-integrated bodies F2, F101, F201, and F351.

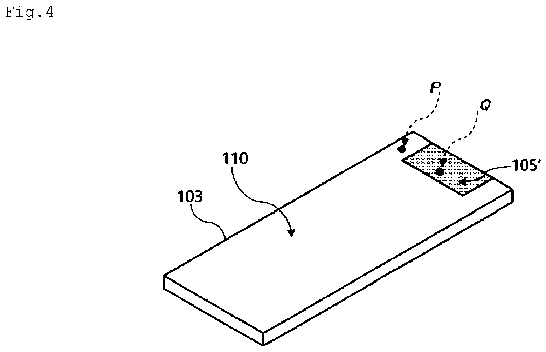

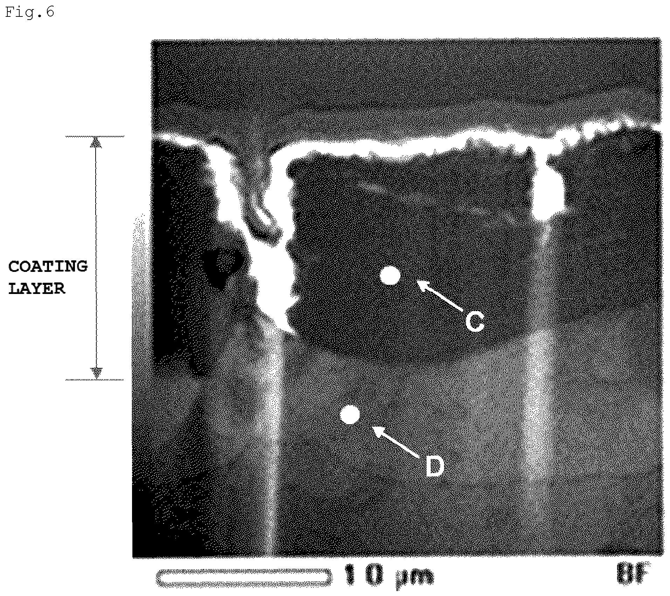

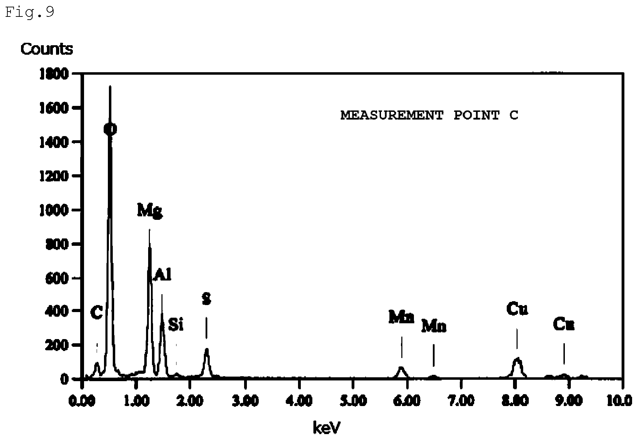

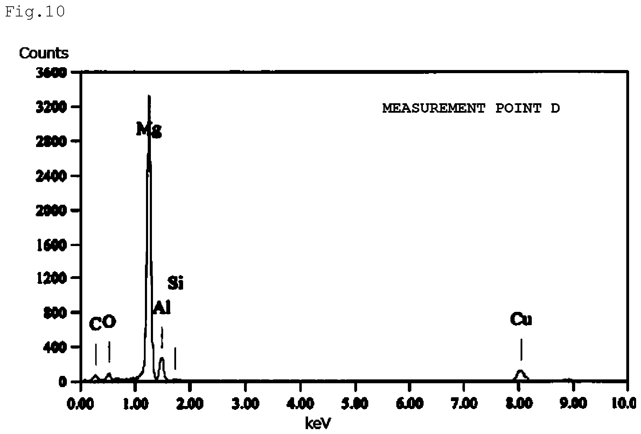

The integrating strengths S_{F2}, S_{F101}, S_{F201}, and S_{F351} of the integrated body F2, the integrated body F101, the integrated body F201, and the integrated body F351 were measured using the same method as the above-described tensile test method and found out to be 28 MPa, 27 MPa, 27 MPa, and 28 MPa. The average value was 28 MPa, and the standard deviation was 0.5 MPa. The broken surfaces were all resin base material breakage. For the magnesium alloy members of the respective integrated bodies after the tensile test, the surface roughness was measured using a surface roughness measurement instrument "SURFCOM 1400D" manufactured by Tokyo Seimitsu Co., Ltd. As a result, it was confirmed that, in all of the treated plates, the 10-point average roughness (Rz) was in a range of 2 µm to 3 µm, and the average length (RSm) of roughness curve elements was in a range of 90 µm to 100 µm. In addition, the tones of portions to which the resin was not integrated were a silver color, which was exactly the same as that of the magnesium alloy plate AZ91D. On the magnesium alloy member 103 divided by the tensile test, a TEM-EDS analysis was carried out at a point P (refer to Fig. 4) close to a resin member broken surface 105' on a non-resin-member-integrated surface. A TEM image is shown in Fig. 6. It was found that, in the TEM image, a coating layer having an average thickness of 1.3 µm was observed. An EDS element spectrum at a point C in a coating vessel is shown in Fig. 9, and an EDS spectrum at a point D in a lower layer portion deeper than the coating layer is shown in Fig. 10. It was found that, as is clear from Fig. 9, the coating layer included a sulfur atom, a manganese atom, and an oxygen atom. As is clear from Fig. 10, in the lower layer portion that was a deeper layer than the coating layer, a manganese atom was not recognized, and thus the lower layer portion is considered to be a magnesium alloy surface layer portion before the chemical conversion treatment. In addition, as a result of carrying out a TEM-EDS analysis at a point Q (refer to Fig. 4) in the region of the resin member broken surface 105', a sulfur atom was not sensed in the coating layer (average thickness: 0.4 µm) observed in a TEM image. From the fact that the integrating strength S_{B} of the integrated body before the reduction treatment and the integrating strength S_{F} after the reduction treatment were almost the same as each other, and no change was recognized between the appearance of the resin portion in the integrated body F after the reduction treatment and the appearance of the resin portion in the integrated body B before the reduction treatment, it is anticipated that no chemical alteration of the resin portion occurs during the reduction treatment.

### [Example 2]

The same treatment as the chemical conversion treatment described in Example 1 was carried out on a 95^{th} intermediate treatment body α, a 195^{th} intermediate treatment body α, a 295^{th} intermediate treatment body α, and a 345^{th} intermediate treatment body α in Example 1, thereby ensuring a surface-roughened body A95, a surface-roughened body A195, a surface-roughened body A295, and a surface-roughened body A345 respectively.

Next, a total of four surface-roughened bodies were treated with a hydroxylamine aqueous solution by the same method as the reduction treatment described in Example 1 (immersion treatment of all roughened bodies), thereby ensuring a reduction treatment body R95, a reduction treatment body R195, a reduction treatment body R295, and a reduction treatment body R345 respectively.

Next, regarding the total four reduction treatment bodies R, a PBT resin manufactured by Polyplastics Co., Ltd. was injection-molded by the same method as the injection molding described in Example 1, thereby obtaining an integrated body C95, an integrated body C195, an integrated body C295, and an integrated body C345. In these four integrated bodies, the tones of metallic surfaces to which the resin was not integrated were, similar to that of the magnesium alloy plate AZ91D, silver color. The integrating strengths of these integrated bodies were measured by the same method as the method described in Example 1. As a result, an integrating strength S_{C95} of the integrated body C95, an integrating strength S_{C195} of the integrated body C195, an integrating strength S_{C295} of the integrated body C295, and an integrating strength S_{C345} of the integrated body C345 were respectively 26 MPa, 26 MPa, 27 MPa, and 24 MPa. The average value was 26 MPa, and the standard deviation was 1.1 MPa.

### [Comparative Example 1]

The same treatment as the chemical conversion treatment described in Example 1 was carried out on a 105^{th} intermediate treatment body α, a 205^{th} intermediate treatment body α, a 305^{th} intermediate treatment body α, and a 355^{th} intermediate treatment body α in Example 1, thereby ensuring a surface-roughened body A105, a surface-roughened body A205, a surface-roughened body A305, and a surface-roughened body A355 respectively.

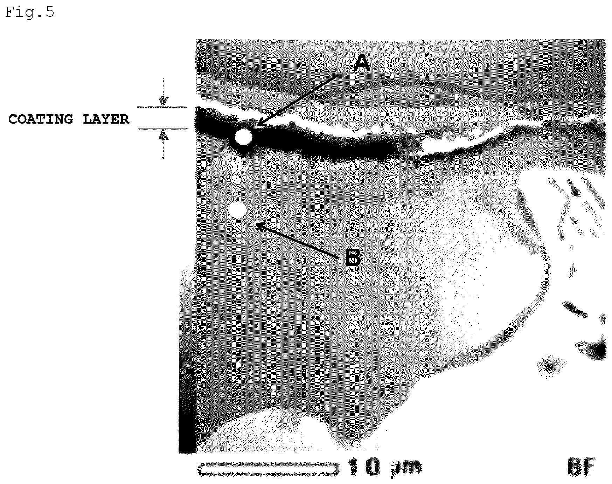

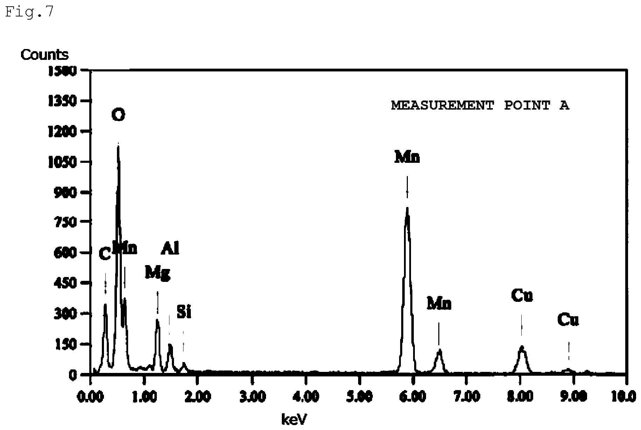

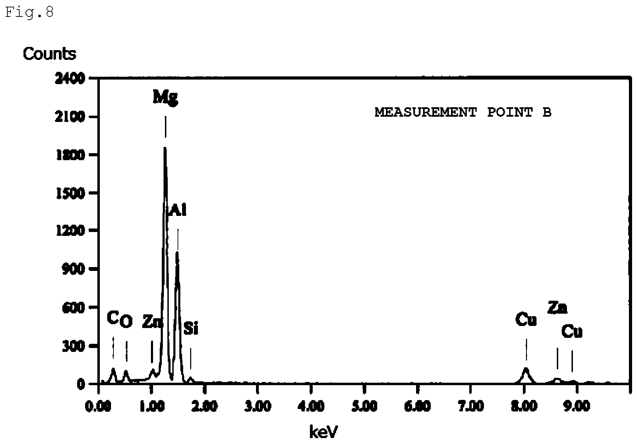

Next, regarding the total four surface-roughened bodies A, a PBT resin manufactured by Polyplastics Co., Ltd. was immediately injection-molded by the same method as the injection molding described in Example 1 without carrying out the reduction treatment, thereby obtaining an integrated body D105, an integrated body D205, an integrated body D305, and an integrated body D355. In these four integrated bodies, the tones of metallic surfaces to which the resin was not integrated were brown to brownish-red. The integrating strengths of these integrated bodies were measured by the same method as the method described in Example 1. As a result, an integrating strength S_{D105} of the integrated body D105, an integrating strength S_{D205} of the integrated body D205, an integrating strength S_{D303} of the integrated body D305, and an integrating strength S_{D343} of the integrated body D355 were respectively 27 MPa, 27 MPa, 29 MPa, and 28 MPa. The average value was 28 MPa, and the standard deviation was 0.8 MPa. On the magnesium alloy member 103 divided by the tensile test, a TEM-EDS analysis was carried out at a point P (refer to Fig. 4) close to a resin member broken surface 105' on a non-resin-member-integrated surface. A TEM image is shown in Fig. 5. It was found that, in the TEM image, a coating layer having an average thickness of 0.15 µm was observed. An EDS element spectrum at a point A in a coating vessel is shown in Fig. 7, and an EDS spectrum at a point B in a lower layer portion of the coating layer is shown in Fig. 8. As is clear from Fig. 7 and Fig. 8, in the test of Comparative Example 1, a sulfur atom was observed in neither the coating layer nor the lower layer portion of the coating layer.

As is clear from Example 1 and Comparative Example 1, it is found that the metallic surfaces, to which the resin was not integrated, of the integrated bodies obtained by insert-molding the thermoplastic resin member in the surface-roughened bodies of a magnesium alloy having a surface layer coated with a manganese oxide-containing film were colored to brown to brownish-red; however, when the entire integrated bodies were immersed in the water-soluble reducing agent-containing aqueous composition, a sulfur atom was sensed in the coating layers, and the colored portions of the metallic surfaces completely disappeared. In addition, it was found that there was no change in the integrating strengths between the metal and the resin before and after the reduction treatment and there was no recognizable change on the resin member surfaces. In addition, as is clear from Example 2, the integrated body in which the coloration of the metallic surface of the non-resin-integrated portion was suppressed could be obtained even by the method in which the entire magnesium alloy surface-roughened body having a surface layer coated with a manganese oxide-containing film was reduced and then the thermoplastic resin was insert-molded. However, in this case, a tendency that the integrating strength between the metal and the resin and the reproducibility slightly degrade is recognized, but does not cause any practical problem.

A principle of the brown color on the magnesium alloy surface being discolored by the hydroxylamine sulfate aqueous solution, which is the water-soluble reducing agent-containing aqueous composition, is not clear, but the present inventors assume as described below. That is, a manganese dioxide layer (Mn^{IV}) coating the magnesium alloy surface for the purpose of corrosion prevention exhibits an intrinsic brown color. It is considered that hydroxylamine sulfate, which is a reducing agent, acts on the manganese dioxide layer (Mn^{IV}), whereby a part or all of the manganese dioxide layer is reduced to manganese sulfate (Mn^{II}), and thus the brown color based on manganese dioxide disappears, and, at the same time, reduced shade based on manganese sulfate becomes dominant. In addition, it is considered that, due to the above-described reduction reaction, a sulfur atom attributed to manganese sulfate is mixed into a coating originally made up of a manganese atom and an oxygen atom.

Priority is claimed on Japanese Patent Application No. 2018-042259, filed March 8, 2018, the content of which is incorporated herein by reference.

The present invention also includes the following aspects.
1. A method for manufacturing a magnesium alloy/resin composite structure including:
   a step of preparing an integrated body including a magnesium alloy member and a resin member integrated to the magnesium alloy member; and
   a step of treating at least a non-integrated portion with the resin member in the magnesium alloy member of the integrated body with an aqueous composition including a water-soluble reducing agent.
2. The method for manufacturing a magnesium alloy/resin composite structure according to 1.,
   in which the magnesium alloy member has a manganese oxide-containing film on a surface.
3.
   The method for manufacturing a magnesium alloy/resin composite structure according to 2., the method further including:
   a step of chemically etching the magnesium alloy member with an acidic aqueous solution and then chemically converting the chemically etched magnesium alloy member with a permanganate aqueous solution, thereby obtaining the magnesium alloy member having a manganese oxide-containing film on a surface.
4. The method for manufacturing a magnesium alloy/resin composite structure according to any one of 1. to 3.,
   in which a pH of the aqueous composition is 3 to 11.
5. The method for manufacturing a magnesium alloy/resin composite structure according to any one of 1. to 4.,
   in which the water-soluble reducing agent includes one or more selected from the group consisting of hypophosphite, a borane compound, hydrazine, an alkyl- and/or aryl-substituted hydrazine, phosphite, hydroxylamine, ascorbic acid, isoascorbic acid, formaldehyde, hypophosphorous acid, and phosphorus acid.
6. The method for manufacturing a magnesium alloy/resin composite structure according to any one of 1. to 5., the method further including:
   a step of, after the step of the treatment with the aqueous composition, carrying out at least one oxidation treatment selected from micro-arc oxidation and anodization on at least a non-integrated portion with the resin member in the magnesium alloy member of the integrated body.

### REFERENCE SIGNS LIST

101: Injection molder
102: Mold
103: Magnesium alloy member
103': Manganese oxide-coated magnesium alloy member
104: Resin-integrated portion
105: Resin member
105': Resin member remaining on magnesium alloy member surface after tensile test (broken surface)
106: Magnesium alloy/resin composite structure
106': Integrated body (precursor)
107: Gate/runner
110: Non-integrated member
P: Measurement point in TEM-EDS test (non-resin-integrated portion)
Q: Measurement point in TEM-EDS test (resin-broken portion)

## Claims

1. A magnesium alloy/resin composite structure comprising:
a magnesium alloy member; and
a resin member integrated to the magnesium alloy member and made of a thermoplastic resin composition,
wherein a surface of the magnesium alloy member, to which the resin member is not integrated, is coated with a layer including a manganese atom, an oxygen atom, and a sulfur atom.

2. The magnesium alloy/resin composite structure according to claim 1,
wherein a surface of the magnesium alloy member, to which the resin member is integrated, is coated with a layer not including a sulfur atom and including a manganese atom and an oxygen atom.

3. The magnesium alloy/resin composite structure according to claim 1 or 2,
wherein an average thickness of the layer is equal to or more than 0.1 µm and equal to or less than 5 µm.

4. A method for manufacturing a magnesium alloy/resin composite structure, the method comprising:
a step of preparing an integrated body in which a resin member is integrated to a magnesium alloy member surface on which a manganese oxide-containing film is formed through a fine protrusion and recess structure, and
a step of treating at least a non-resin-member-integrated portion of the integrated body with an aqueous composition including a water-soluble reducing agent.

5. The method for manufacturing a magnesium alloy/resin composite structure according to claim 4,
wherein a magnesium alloy material is chemically etched with an acidic aqueous solution, and then the chemically etched magnesium alloy material is subject to a chemical conversion treatment with a permanganate aqueous solution, thereby obtaining the magnesium alloy material on which the manganese oxide-containing film is formed through the fine protrusion and recess structure.

6. The method for manufacturing a magnesium alloy/resin composite structure according to claim 4 or 5,
wherein a pH of the aqueous composition is 3 to 11.

7. The method for manufacturing a magnesium alloy/resin composite structure according to any one of claims 4 to 6,
wherein the water-soluble reducing agent includes one or more selected from the group consisting of hypophosphite, a borane compound, hydrazine, an alkyl- and/or aryl-substituted hydrazine, phosphite, hydroxylamine, ascorbic acid, isoascorbic acid, formaldehyde, hypophosphorous acid, and phosphorus acid.

8. The method for manufacturing a magnesium alloy/resin composite structure according to any one of claims 4 to 7, the method further comprising:
a step of, after the step of the treatment with the aqueous composition, carrying out at least one oxidation treatment selected from micro-arc oxidation and anodization on at least the non-resin-member-integrated portion of the integrated body.
